# EUROPEAN PATENT SPECIFICATION

(11) **EP 2 689 483 B1**
(45) Date of publication and mention of the grant of the patent: **21.03.2018**
(21) Application number: 12700072.7
(22) Date of filing: 11.01.2012
(51) Int. Cl.: H01M 2/12

(54) **COVER FOR ELECTROLYTIC BATTERIES**
ABDECKUNG FÜR ELEKTROLYTISCHE BATTERIEN
CAPOT POUR BATTERIES ÉLECTROLYTIQUES

(30) Priority: 25.03.2011 IT MI20110479
(43) Date of publication of application: 29.01.2014
(73) Proprietor: ACCUMA S.p.A., 20129 Milano (IT)
(72) Inventor: GIBELLINI, Folco, CH-6922 Morcote (CH)
(74) Representative: Eterno, Enrico
(86) International application number: PCT/EP2012/050344
(87) International publication number: WO 2012/130483

(56) References cited:
- US-A- 3 508 972

## Description

The present invention relates to a cover for electrolytic batteries.

Electrolytic batteries, for example lead-acid batteries, are used in vehicles mainly to provide the power supply required to start the engine and to the several electrical services. They are typically made up of a container which is closed upwardly by a cover and is divided internally into cells, in each of which a liquid electrolyte, for example aqueous sulfuric acid, is poured, and pairs of electrodes, made for example of lead, are immersed.

The manufacture of this type of battery can require the liquid electrolyte to be poured into the respective cell after permanently fixing, by welding or other means, the cover onto the container. For this purpose, conventional covers comprise openings at each cell of the container, which make it possible to pour the electrolyte into the respective cell through the cover. These filling openings also make it possible to vent the gases that are generated within the cells which are typically closed by respective caps, obviously in order to avoid the escape of the electrolyte.

As an alternative, the cells can be filled with liquid electrolyte before fixing the cover onto the container, in which case the cover can be provided without openings.

It is also known, in batteries with a double cover, to weld a secondary cover onto the primary cover to be fixed onto the container of the battery, so that the surface of the secondary cover covers the filling openings of the primary cover without using caps.

In conventional batteries it is necessary to ensure the venting of the gases generated internally as a consequence of the electrolytic reactions, typically during the initial charging of the battery or during normal operation.

Moreover, since the gases can convey droplets of liquid electrolyte, it is necessary at the same time to prevent these drops from being expelled from the battery, since this is highly flammable material.

A centralized degassing system is disclosed in EP639862 in which a gas collection channel is used which is integrated in the battery cover and is extended in a rectilinear fashion between two opposite side walls of the cover, so as to be connected to the inside of each cell. The collection channel leads into respective chambers that divert by 90° the path of the gases in order to convey them to a seat of a flamebreak porous pad, typically known as frit, before venting them externally.

It is instead known, from WO01/04972, to define a degassing chamber above each cell, in the space comprised between a primary cover, which is fixed onto the edge of the container of the battery, and a secondary cover, which is fixed onto the primary cover and is provided with holes which are aligned with respective filling openings for the liquid electrolyte that are provided on the primary cover.

A drawback in conventional batteries is observed in the complexity of the capping of the filling openings, since it is necessary to provide for the fitting of several caps on a heavy and bulky structure, such as the container of the battery filled with electrolyte and closed upwardly by the cover.

A further problem is observed with the caps for the electrolyte filling openings, because such caps are typically accessible from the outside and consequently may potentially be removed by a user who wishes to attempt to repair the battery. Such caps, therefore, compromise safety.

If a secondary cover is used which is provided with through holes for respective caps, the problem may also arise of the alignment between these holes and the filling openings for the electrolyte which are provided in the primary cover. In the two covers, since they are provided by molding plastics, shrinkage of material at the openings might in fact occur after molding. Therefore, due to the different extent of the shrinkage of the material in the two covers, the spacing between the openings of the primary cover might not coincide with the spacing provided among the holes of the secondary cover, creating tightness and mutual fixing problems between the two covers.

Moreover, the presence of a centralized degassing system with vents at the lateral ends of the cover can entail problems due to the so-called "pump effect", i.e., the accumulation of drops of liquid electrolyte at the ends of the gas collection channel, caused by the fact that any drops of electrolyte that might be present are pushed by the other drops of electrolyte that are created progressively, for example due to vibrations of the battery.

A further problem arises in centralized degassing systems due to the fact that the frit is present on the cover during the battery manufacturing operations, for example during filling and initial charging, therefore, the frit might become impregnated with electrolyte already during construction even before it is used.

The aim of the present invention is to overcome the drawbacks of the background art cited above, by providing in particular a cover that simplifies the manufacture of the battery and increases safety.

Within this aim, an object of the invention is to provide a cover for batteries with centralized degassing of the so-called "maintenance-free" type, which prevents removal of the caps of the filling openings.

Another object of the present invention is to make it possible to use a cover of the "double cover" type, i.e., constituted by a primary cover and a secondary cover, which is not affected by misalignments between the filling openings caused by shrinkages of the material or the like.

Moreover, an object of the present invention is to devise a cover with centralized degassing that reduces the possibility that drops of liquid electrolyte might reach the frit.

Another object of the invention is to prevent the frit from being wet by the electrolyte during battery manufacture.

Another object of the invention is to provide a cover for batteries that is highly reliable, relatively easy to provide and at competitive costs.

This aim and these and other objects, that will become better apparent hereinafter, are achieved by a cover for electrolytic batteries according to claim 1.

Further characteristics and advantages of the invention will become better apparent from the description of preferred but not exclusive embodiments of the cover according to the invention, illustrated by way of non-limiting example in the accompanying drawings, wherein:

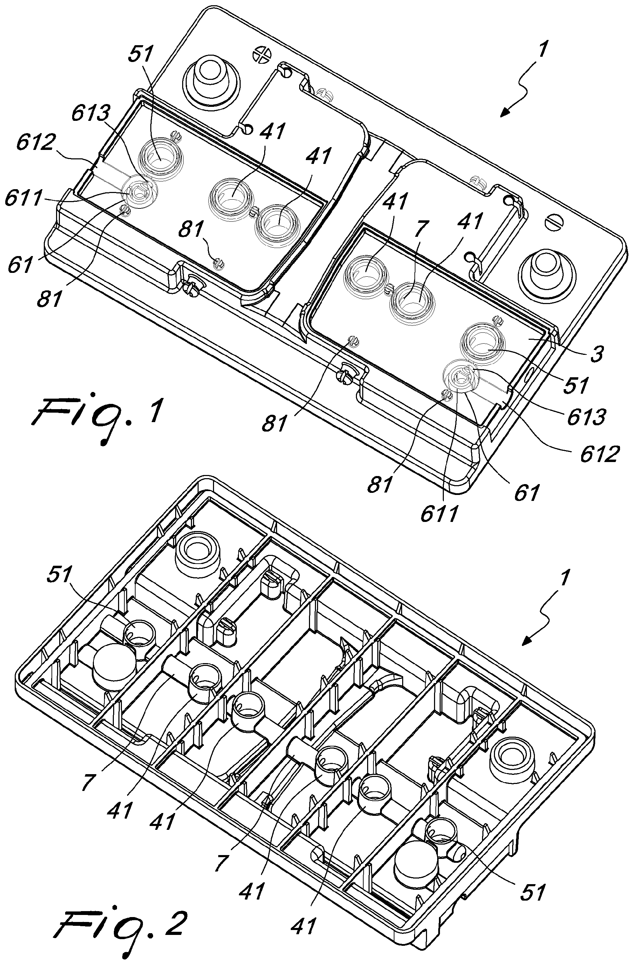

Figure 1 is a top perspective view of the primary cover used in the cover according to a first embodiment of the invention;
Figure 2 is a bottom perspective view of the primary cover of Figure 1;

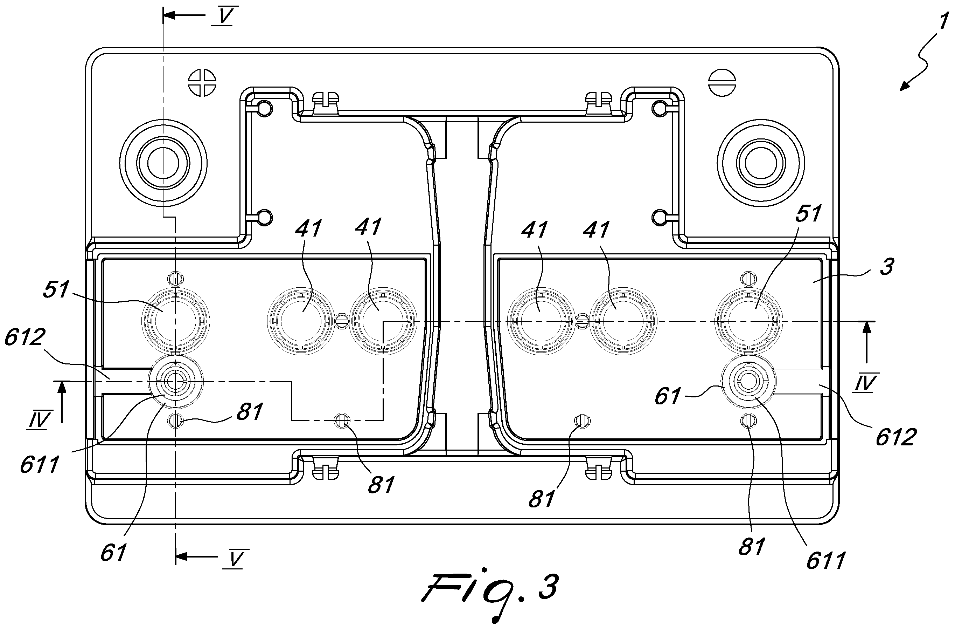

Figure 3 is a plan view of the primary cover of Figure 1;
Figure 4 is a sectional view, taken along line IV-IV, of the primary cover of Figure 3;
Figure 5 is a sectional view, taken along line V-V, of the primary cover of Figure 3;

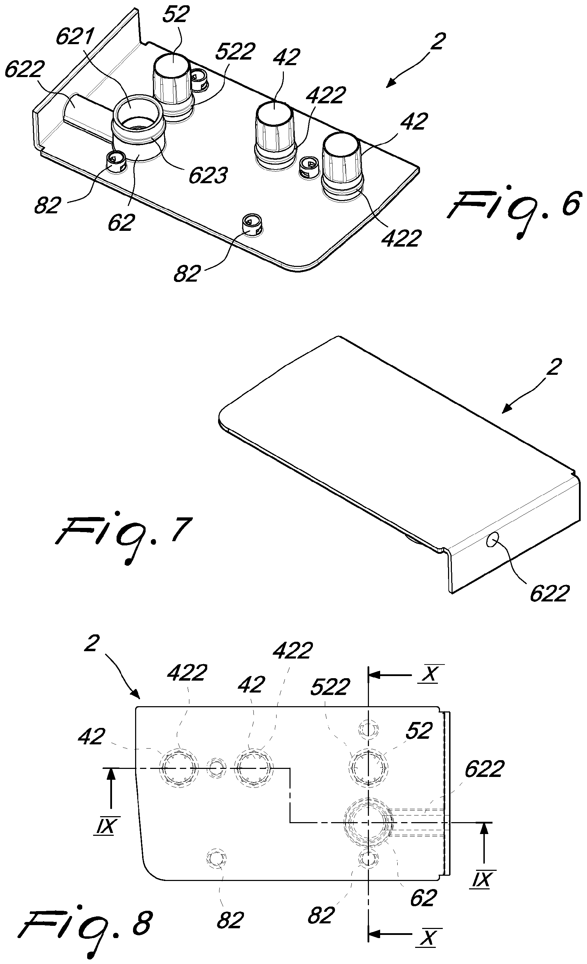

Figure 6 is a bottom perspective view of a secondary cover to be fixed to the primary cover of Figure 1;
Figure 7 is a top perspective view of the secondary cover of Figure 6;
Figure 8 is a plan view of the secondary cover of Figure 6;

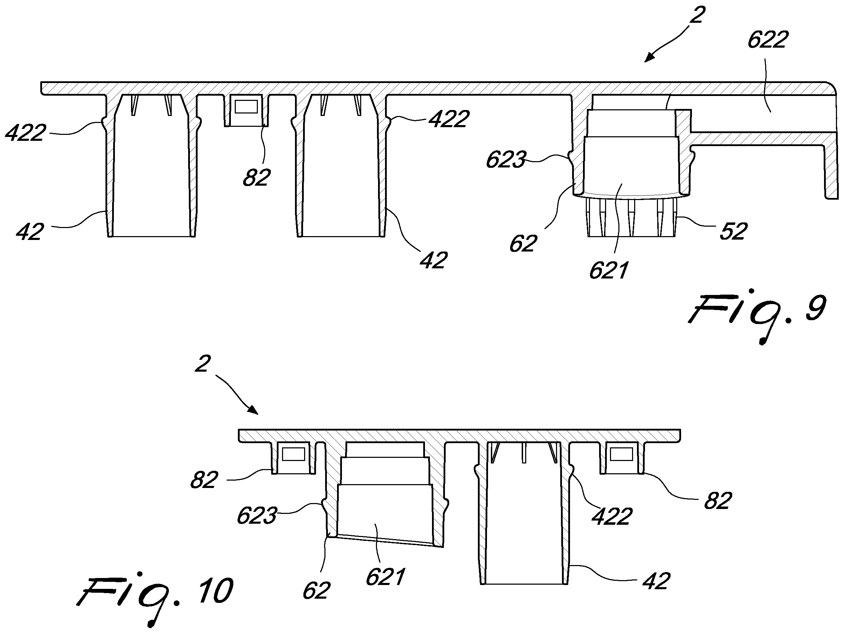

Figure 9 is a sectional view, taken along line IX-IX, of the secondary cover of Figure 8;
Figure 10 is a sectional view, taken along line X-X, of the secondary cover of Figure 8;

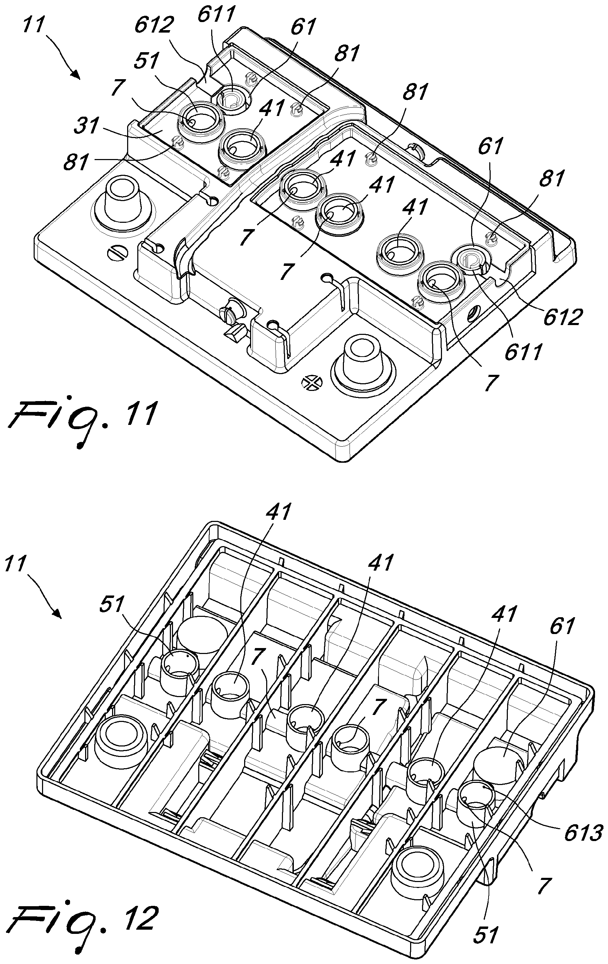

Figure 11 is a top perspective view of the primary cover used in the cover according to a second embodiment of the invention;
Figure 12 is a bottom perspective view of the primary cover of Figure 11;

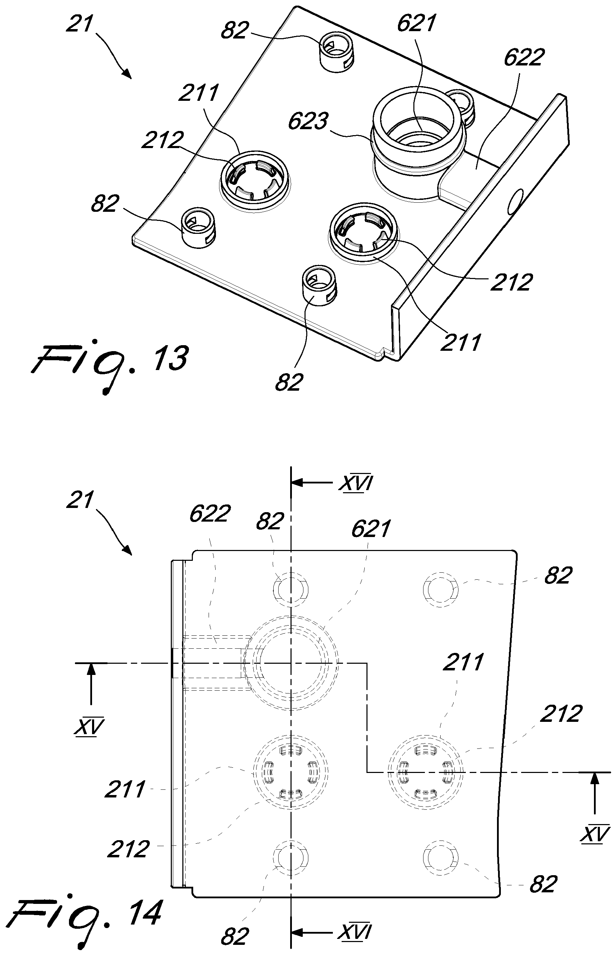

Figure 13 is a bottom perspective view of a secondary cover to be fixed to the primary cover of Figure 11;
Figure 14 is a plan view of the secondary cover of Figure 13;

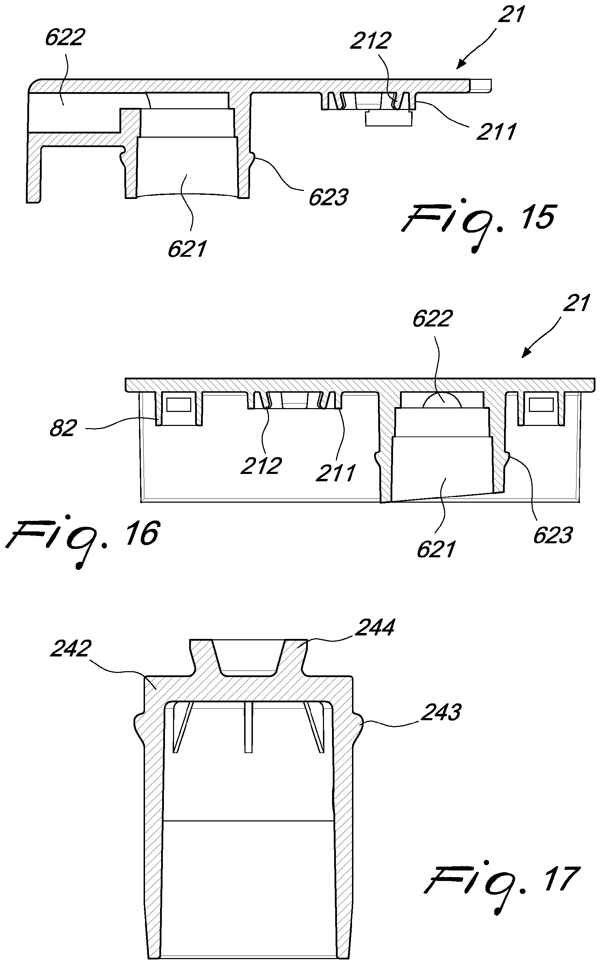

Figure 15 is a sectional view, taken along line XV-XV, of the secondary cover of Figure 14;
Figure 16 is a sectional view, taken along line XVI-XVI, of the secondary cover of Figure 14;
Figure 17 is an axial sectional view of the cap that can be fixed to the secondary cover of Figure 13 and which has a substantially cylindrical shape.

In the description that follows, as well as in the drawings, identical reference numerals correspond to mutually identical elements.

With reference to the figures, the cover according to the invention can comprise a primary cover 1 or 11 which is adapted to be fixed on a container of electrolytic cells, not shown, particularly on the upper rim of a tank provided with a plurality of electrolytic cells arranged mutually side by side and separated by walls.

The cover according to the invention and the corresponding container of electrolytic cells are both preferably made of plastics, for example polypropylene, and can be obtained by molding with conventional methods.

With reference to both of the embodiments shown in the drawings, the primary cover 1 or 11 has an upper face 3 or 31 and a lower face and is provided with a plurality of openings 41, 51 which are adapted to allow the filling with electrolyte of respective electrolytic cells when the primary cover 1 or 11 is fixed on the container of the electrolytic cells. The openings 41, 51 are also vents, i.e., they prevent the gases that are generated inside each cell from accumulating inside the cell.

Each one of the openings 41 and 51 is surrounded by a wall, which protrudes from the lower face of the primary cover 1 or 11, or toward the electrolytic cell when the primary cover 1 or 11 is fixed onto the container of the electrolytic cells. The wall of each opening 41 and 51 is conical in its annular band 410 that is directed toward the upper face 3 or 31, with a taper that converges toward the upper face 3 or 31.

The walls of the openings 41 and 51 are crossed transversely, preferably in a radial direction, by a common channel 7 for collecting the gases that are generated during the operation of the electrolytic battery, such gases can contain hydrogen and oxygen and can carry drops of electrolyte. The common channel 7 is substantially a gas collector, which lies in a linear fashion along an axis and opens at each filling opening 41 and 51, allowing any drops of electrolyte carried by the gas to fall back into one of the electrolytic cells of the battery. The common channel 7 is provided with at least one vent toward the outside of the cover, with a diameter of for example at least 5.9-6 mm.

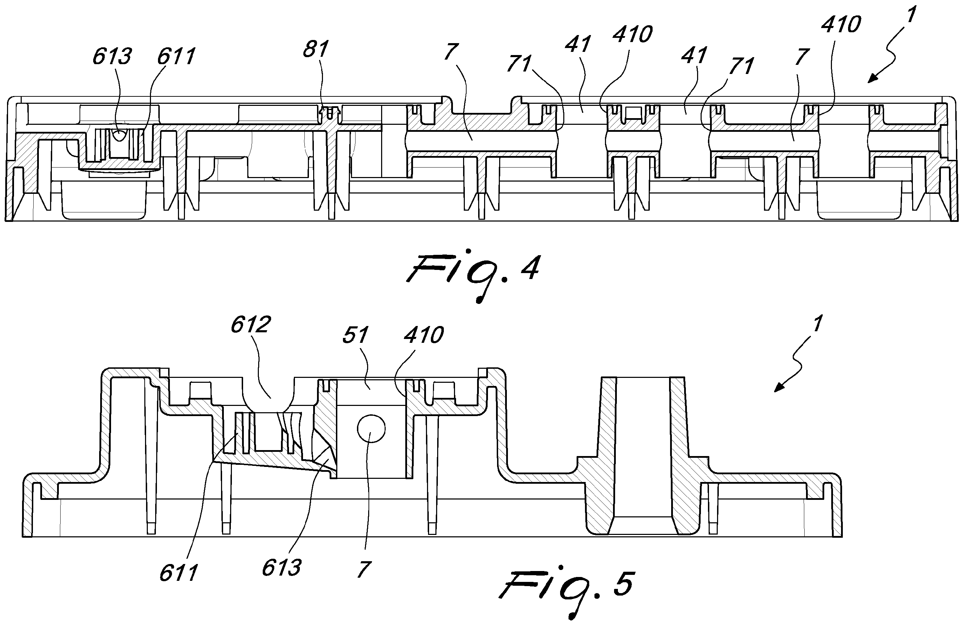

The gas collection channel 7 is closed at both axial ends. In particular, with reference to Figure 4, the end of the channel 7 that is visible on the right in the figure is open onto the outer edge of the cover 1 for molding reasons, but is then sealed in a gas-tight manner and advantageously rendered inaccessible to the outside when the secondary cover, described hereinafter, is applied.

Moreover, the channel 7 is connected to a seat 61 for a frit, which is not shown. The seat 61 of the frit can be arranged laterally with respect to the axis of the gas collection channel 7 and on a plane that is parallel to the axis of the channel 7 and is comprised between the channel 7 and the upper face 3 or 31 of the primary cover 1 or 11, so that the frit is at a higher level than the gas collection channel 7 during normal use of the battery.

In particular, the seat 61 of the frit is connected to the gas collection channel 7 by means of a duct 613 whose cross-section is at least partly smaller than the cross-section of the gas collection channel 7, for example with a diameter of less than 6 mm, more preferably less than 2 mm or even more preferably less than 1 mm.

The duct 613 is transverse with respect to the axis of the gas collection channel 7 and is obtained preferably as a branch that exits from the wall of one of the filling openings, preferably from the wall of at least one of the two openings 51 arranged at the ends of the gas collection channel 7. This solution is preferable with respect to a direct branching from the wall of the channel 7, because it allows any drops that are present in the channel to discharge into the cell through the opening 51 before reaching the mouth of the duct 613.

The duct 613 can have one or more chokes having a smaller cross-section than the gas collection channel 7, for example with a diameter of less than 6 mm, more preferably less than 2 mm or even more preferably less than 1 mm. It is preferable to arrange the choke at the bottom of the wall of the opening 51, so as to prevent upstream the passage of any drops of electrolyte.

As an alternative, the duct 613 can have a smaller cross-section than the gas collection channel 7 along all of its extension, for example with a maximum diameter of less than 6 mm, more preferably less than 2 mm or even more preferably less than 1 mm.

The reduced cross-section of the duct 613 and the fact that the duct branches from the wall of the opening 51 in a direction that is substantially transverse to the axis of the gas collection duct 7 enable to reduce the likelihood that drops of electrolyte might reach the seat 61 of the frit due to the so-called pump effect.

Moreover, considering that the seat 61 of the frit is at a higher level than the duct 7 during normal use of the battery, the duct 613 has the appearance of a rising ramp that connects the channel 7 to the seat 61 of the frit. This rising arrangement further reduces the likelihood that drops of electrolyte might reach the seat 61 of the frit.

The seat 61 of the frit can also comprise a labyrinth-like path 611, which further facilitates the separation of the gas from any residual drops of electrolyte that might still be transported by the gas that flows out of the duct 613. The labyrinth-like path can be obtained within the seat 61, upstream of the frit, by providing mutually concentric walls provided with notches that do not face each other directly.

The bottom of the seat 61 is advantageously inclined, so that any drops that are present thereon can return by gravity into the electrolytic cell through the channel 613.

The cover according to the invention can further comprise at least one secondary cover 2 or 21, for example two secondary covers, although the drawings show only one secondary cover for each embodiment.

Each secondary cover 2 or 21, also preferably made of plastics such as polypropylene, can be fixed to the respective upper face 3 or 31 of the primary cover 1 or 11 in order to cover the openings 41 and 51 and comprises a plurality of caps 42 and 52 or 242 that protrude and can engage the openings 41 and 51 of the primary cover 1 or 11.

In the first embodiment of the invention, the caps 42 and 52 are integrated in the secondary cover 2 or are obtained in one piece with the secondary cover 2 during its molding.

In the second embodiment, instead, the caps 242 are separated from the secondary cover 21 and are subsequently associated with it before fixing it to the respective primary cover 11. In particular, in the second embodiment each cap 242 is retained axially on the secondary cover 21 and advantageously can move transversely so as to have play in a transverse direction, for example by 1 millimeter or less. This play allows the caps 242, once they have been applied to the secondary cover 21, to arrange themselves in axial alignment with the openings 41 and 51 of the primary cover 11, adapting to potential misalignments caused by any different shrinkages of the material in the primary cover 11 and in the secondary cover 21.

For this purpose, the secondary cover 21 can comprise seats 211 for the caps 242, each provided with axial fixing teeth 212 which can be coupled to an undercut 244 of the cap 242. The axial fixing teeth 212 can be arranged along a circumference and can be inclined toward the center of the circumference, so as to interfere with the upper edge of the undercut 244 and allow limited mobility thereof on the plane of the seat 211.

With reference to the first embodiment, each one of the caps 42 and 52 is provided with a radial expansion 422 and 522, respectively, which is adapted to engage in a gas-tight manner on the wall of the respective opening 41 and 51 between the gas collection channel 7 and the upper face 3 of the primary cover 1. In particular, considering that the axis of the channel 7 and the upper face 3 are substantially mutually parallel, the radial expansion 422 and 522 of each cap 42 and 52 engages an annular band 410 of the wall of the openings 41 and 51 that lies above the upper edge 71 of the channel 7, so as to not prevent the inflow into the channel 7 of the gases that enter the wall of the openings 41 and 51. The annular band 410 of the inner wall of the openings 41 and 51 can, as mentioned earlier, be conical and converge toward the upper face 3 of the primary cover 1, in this manner, the radial expansion 422 and 522 allows the axial locking of the secondary cover 2 on the primary cover 1.

A similar coupling occurs between the caps 242, which can be coupled to the secondary cover 21 of the second embodiment, and the openings 41 and 51 of the primary cover 11, in which gas tightness is ensured by the radial expansion 243 provided on the lateral surface of the cap 242.

The radial expansion 422, 522 and 243 can be integrated on the respective cap 42, 52 and 242, as shown in the figures, or can be obtained by fixing an annular gasket, not shown, on the lateral surface of the cap 42, 52 or 242.

The fixing of the secondary cover 2 or 21 on the respective primary cover 1 or 11 can be rendered irreversible and tamper-resistant by means of the snap coupling between engagement tabs 81 that protrude from the upper face 3 or 31 of the primary cover 1 or 11 and corresponding slots provided on cylindrical side walls 82 that protrude downwardly from the secondary cover 2 or 21.

As can be seen from the figures, the secondary cover 2 or 21 has no openings, except for the hole provided laterally for gas venting, to be discussed later. The caps 42, 52 and 242 therefore can no longer be accessed from the outside once the secondary cover 2 or 21 has been fixed to the upper face of the respective primary cover 1 or 11.

Finally, the secondary cover 2 or 21 can comprise a tubular protrusion 62, which can be inserted hermetically in the seat 61 of the frit described above and which comprises an outward vent 622 for the gases, which in particular exits onto one side of the secondary cover 2 or 21, so that it is arranged on one of the short sides of the final cover according to the invention.

The frit is fixed in the internal volume 621 of the tubular protrusion 62, so as to make it possible to manufacture and load initially the battery without the frit being on the primary cover welded onto the container of the battery during these operations.

In order to achieve a seal between the inner surface of the seat 61 of the frit and the tubular protrusion 62, the latter can comprise an annular convex region 623 on the outer surface in order to force the gases to pass exclusively through the frit, preventing any flow around it to vent otherwise outward or accumulate between the secondary cover 2 or 21 and the primary cover 1 or 11. In this manner, the gases pass exclusively in the vent 622.

In practice it has been found that the device according to the invention fully achieves the intended aim, since the manufacture of the battery is simplified and its safety is increased.

In particular, the fact of providing directly on the secondary covers the closure caps of the filling openings of the primary cover enables to avoid the need to fit the caps directly onto the battery.

Moreover, since the secondary covers have no openings, except for the vent for the gases produced by the reactions inside the battery, it makes it possible to obtain a battery of the maintenance-free type, i.e., which prevents removal of the caps from the filling openings. The battery is also aesthetically pleasant in appearance.

The cover according to the invention also enables to have a centralized degassing which reduces the likelihood that drops of liquid electrolyte might reach the frit and that the frit might be wetted by the electrolyte during the manufacture of the battery. It is evident that the solution provided by the seat 61 of the frit, by its raised position with respect to the common gas collection channel 7 and by the duct 613 having a reduced cross-section can be used in any type of cover for electrolytic batteries and not necessarily in a double cover, such as the one shown in the drawings.

Although the device according to the invention has been conceived in particular for electrolytic batteries of the lead-acid type, it can be used nonetheless more generally for any battery with liquid electrolyte.

The device thus conceived is susceptible of numerous modifications and variations, all of which are within the scope of the appended claims; all the details may further be replaced with other technically equivalent elements.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A cover for electrolytic batteries, comprising a primary cover (1, 11) adapted to be fixed on a container of electrolytic cells, the primary cover (1, 11) comprising an upper face (3, 31) and a lower face and being provided with a plurality of openings (41, 51) for filling with electrolyte for respective electrolytic cells of the container, each one of said openings (41, 51) being surrounded by a wall, said cover comprising at least one secondary cover (2, 21) which can be fixed on the upper face of said primary cover (1, 11) to cover said openings (41, 51), said secondary cover (2, 21) comprising a plurality of caps (42, 52, 242), which protrude from said secondary cover (2, 21) and can engage respectively in said openings (41, 51) of the primary cover (1, 11), each one of said caps (42, 52, 242) being provided with a radial expansion (422, 522, 243), **characterized in that** said walls of the openings (41, 51) protrude from the lower surface of the primary cover (1, 11) and are crossed transversely by a common gas collection channel (7),
and **in that** said radial expansion (422, 522, 243) is adapted to engage in a gas-tight manner on the wall of the respective opening (41, 51) between said common gas collection channel (7) and said upper face (3, 31) of the primary cover (1, 11), said caps (42, 52, 242) not being accessible when the secondary cover (2, 21) is fixed on the upper face (3, 31) of the primary cover (1, 11).

2. The cover according to claim 1, **characterized in that** said caps (42, 52) are integrated in said secondary cover (2) .

3. The cover according to claim 1, **characterized in that** said caps (242) are retained axially on said secondary cover (21) and can move transversely so as to give said caps (242) play in a transverse direction.

4. The cover according to one or more of the preceding claims, **characterized in that** said radial expansion (422, 522, 243) is integrated on said cap or is provided with an annular gasket which is fixed to the lateral surface of said cap (42, 52, 242) that protrudes from said secondary cover (2, 21).

5. The cover according to one or more of the preceding claims, **characterized in that** said wall of the filling opening comprises an annular band (410) which is comprised between said common gas collection channel (7) and said upper face (3, 31) of the primary cover (1, 11), said annular band (410) being conical and converging toward said upper face (3, 31).

6. The cover according to one or more of the preceding claims, **characterized in that** said common gas collection channel (7) is connected to a seat (61) for a frit, said seat (61) of the frit being arranged laterally with respect to said common gas collection channel (7) and on a plane that is comprised between said channel (7) and the upper face (3, 31) of said primary cover (1, 11).

7. The cover according to claim 6, **characterized in that** said seat (61) of the frit is connected to said common gas collection channel (7) by means of a duct (613) that has a smaller cross-section than the common gas collection channel (7).

8. The cover according to one of claims 6 or 7, **characterized in that** said seat (61) of the frit comprises a labyrinth-like path (611).

9. The cover according to one or more of claims 6 to 8, **characterized in that** said secondary cover (2, 21) comprises a tubular protrusion (62), which can be inserted hermetically in said seat (61) of the frit and which comprises an outward vent (622) for the gases.

10. An electrolytic battery, comprising a tank which is substantially shaped like a parallelepiped and is provided internally with a plurality of electrolytic cells, **characterized in that** said tank is closed in an upper region by the cover according to one or more of the preceding claims.

## Patentansprüche

1. Abdeckung für elektrolytische Batterien, umfassend eine primäre Abdeckung (1, 11), welche dafür geeignet ist, an einem Behältnis elektrolytischer Zellen fixiert zu sein, wobei die primäre Abdeckung (1, 11) eine obere Fläche (3, 31) und eine untere Fläche umfasst und mit einer Mehrzahl von Öffnungen (41, 51) zum Befüllen mit Elektrolyt für jeweilige elektrolytische Zellen des Behältnisses bereitgestellt ist, wobei jede der Öffnungen (41, 51) von einer Wand umgeben ist, wobei die Abdeckung wenigstens eine sekundäre Abdeckung (2, 21) umfasst, welche an der oberen Fläche der primären Abdeckung (1, 11) fixiert sein kann, um die Öffnungen (41, 51) abzudecken, wobei die sekundäre Abdeckung (2, 21) eine Mehrzahl von Kappen (42, 52, 242) umfasst, welche von der sekundären Abdeckung (2, 21) vorstehen und jeweils in die Öffnungen (41, 51) der primären Abdeckung (1, 11) eingreifen können, wobei jede der Kappen (42, 52, 242) mit einer radialen Ausweitung (422, 522, 243) bereitgestellt ist,
**dadurch gekennzeichnet, dass** die Wände der Öffnungen (41, 51) von der unteren Fläche der primären Abdeckung (1, 11) vorstehen und von einem gemeinsamen Gassammelkanal (7) transversal gekreuzt werden,
und dass die radiale Ausweitung (422, 522, 243) dafür geeignet ist, in einer gasdichten Weise an der Wand der jeweiligen Öffnung (41, 51) zwischen dem gemeinsamen Gassammelkanal (7) und der oberen Fläche (3, 31) der primären Abdeckung (1,11) einzugreifen, wobei die Kappen (42, 52, 242) nicht erreichbar sind, wenn die sekundäre Abdeckung (2, 21) an der oberen Fläche (3, 31) der primären Abdeckung (1, 11) fixiert ist.

2. Abdeckung nach Anspruch 1, **dadurch gekennzeichnet, dass** die Kappen (42, 52) in der sekundären Abdeckung (2) integriert sind.

3. Abdeckung nach Anspruch 1, **dadurch gekennzeichnet, dass** die Kappen (242) axial an der sekundären Abdeckung (21) gehalten sind und sich transversal bewegen können, um den Kappen (242) in einer transversalen Richtung Spiel zu verleihen.

4. Abdeckung nach einem oder mehreren der vorhergehenden Ansprüche, **dadurch gekennzeichnet, dass** die radiale Ausweitung (422, 522, 243) an der Kappe integriert ist oder mit einer ringförmigen Dichtung bereitgestellt ist, welche an der lateralen Fläche der Kappe (42, 52, 242) fixiert ist, welche von der sekundären Abdeckung (2, 21) vorsteht.

5. Abdeckung nach einem oder mehreren der vorhergehenden Ansprüche, **dadurch gekennzeichnet, dass** die Wand der Befüllungsöffnung ein ringförmiges Band (410) umfasst, welches zwischen dem gemeinsamen Gassammelkanal (7) und der oberen Fläche (3, 31) der primären Abdeckung (1, 11) umfasst ist, wobei das ringförmige Band (410) konisch ist und in Richtung der oberen Fläche (3, 31) konvergiert.

6. Abdeckung nach einem oder mehreren der vorhergehenden Ansprüche, **dadurch gekennzeichnet, dass** der gemeinsame Gassammelkanal (7) mit einem Sitz (61) für eine Fritte verbunden ist, wobei der Sitz (61) der Fritte lateral in Bezug auf den gemeinsamen Gassammelkanal (7) und auf einer Ebene angeordnet ist, welche zwischen dem Kanal (7) und der oberen Fläche (3, 31) der primären Abdeckung (1, 11) umfasst ist.

7. Abdeckung nach Anspruch 6, **dadurch gekennzeichnet, dass** der Sitz (61) der Fritte mittels einer Leitung (613) mit dem gemeinsamen Gassammelkanal (7) verbunden ist, welche einen kleineren Querschnitt als der gemeinsame Gassammelkanal (7) aufweist.

8. Abdeckung nach einem der Ansprüche 6 oder 7, **dadurch gekennzeichnet, dass** der Sitz (61) der Fritte einen labyrinthartigen Pfad (611) umfasst.

9. Abdeckung nach einem oder mehreren der Ansprüche 6 bis 8, **dadurch gekennzeichnet, dass** die sekundäre Abdeckung (2, 21) einen rohrförmigen Vorsprung (62) umfasst, welcher hermetisch in den Sitz (61) der Fritte eingefügt sein kann und welcher eine nach außen führende Entlüftung (622) für die Gase umfasst.

10. Elektrolytische Batterie, umfassend einen Behälter, welcher im Wesentlichen wie ein Parallelepiped geformt ist und im Inneren mit einer Mehrzahl von elektrolytischen Zellen bereitgestellt ist, **dadurch gekennzeichnet, dass** der Behälter in einem oberen Bereich durch die Abdeckung nach einem oder mehreren der vorhergehenden Ansprüche geschlossen ist.

## Revendications

1. Capot pour batteries électrolytiques, comprenant un capot primaire (1, 11) adapté pour être fixé sur un contenant de cellules électrolytiques, le capot primaire (1, 11) comprenant une face supérieure (3, 31) et une face inférieure et étant muni d'une pluralité d'ouvertures (41, 51) pour le remplissage avec un électrolyte pour des cellules électrolytiques respectives du contenant, chacune desdites ouvertures (41, 51) étant entourée par une paroi, ledit capot comprenant au moins un capot secondaire (2, 21) qui peut être fixé sur la face supérieure dudit capot primaire (1, 11) pour couvrir lesdites ouvertures (41, 51), ledit capot secondaire (2, 21) comprenant une pluralité de bouchons (42, 52, 242), qui font saillie à partir dudit capot secondaire (2, 21) et peuvent entrer en prise respectivement dans lesdites ouvertures (41, 51) du capot primaire (1, 11), chacun desdits bouchons (42, 52, 242) étant muni d'un prolongement radial (422, 522, 243),
**caractérisé en ce que** lesdites parois des ouvertures (41, 51) font saillie à partir de la surface inférieure du capot primaire (1, 11) et sont coupées transversalement par un canal de collecte de gaz commun (7),
et **en ce que** ledit prolongement radial (422, 522, 243) est adapté pour entrer en prise d'une manière étanche aux gaz sur la paroi de l'ouverture respective (41, 51) entre ledit canal de collecte de gaz commun (7) et ladite face supérieure (3, 31) du capot primaire (1, 11), lesdits bouchons (42, 52, 242) n'étant pas accessibles lorsque le capot secondaire (2, 21) est fixé sur la face supérieure (3, 31) du capot primaire (1, 11).

2. Capot selon la revendication 1, **caractérisé en ce que** lesdits bouchons (42, 52) sont intégrés dans ledit capot secondaire (2).

3. Capot selon la revendication 1, **caractérisé en ce que** lesdits bouchons (242) sont retenus axialement sur ledit capot secondaire (21) et peuvent bouger transversalement de manière à donner auxdits bouchons (242) du jeu dans une direction transversale.

4. Capot selon une ou plusieurs des revendications précédentes, **caractérisé en ce que** ledit prolongement radial (422, 522, 243) est intégré sur ledit bouchon ou est muni d'un joint annulaire qui est fixé à la surface latérale dudit bouchon (42, 52, 242) qui fait saillie à partir dudit capot secondaire (2, 21).

5. Capot selon une ou plusieurs des revendications précédentes, **caractérisé en ce que** ladite paroi de l'ouverture de remplissage comprend une bande annulaire (410) qui est comprise entre ledit canal de collecte de gaz commun (7) et ladite face supérieure (3, 31) du capot primaire (1, 11), ladite bande annulaire (410) étant conique et convergeant vers ladite face supérieure (3, 31).

6. Capot selon une ou plusieurs des revendications précédentes, **caractérisé en ce que** ledit canal de collecte de gaz commun (7) est raccordé à un siège (61) pour une fritte, ledit siège (61) de la fritte étant agencé latéralement par rapport audit canal de collecte de gaz commun (7) et sur un plan qui est compris entre ledit canal (7) et la face supérieure (3, 31) dudit capot primaire (1, 11).

7. Capot selon la revendication 6, **caractérisé en ce que** ledit siège (61) de la fritte est raccordé audit canal de collecte de gaz commun (7) au moyen d'un conduit (613) qui a une section transversale plus petite que le canal de collecte de gaz commun (7).

8. Capot selon l'une des revendications 6 ou 7, **caractérisé en ce que** ledit siège (61) de la fritte comprend un chemin du type labyrinthe (611).

9. Capot selon une ou plusieurs des revendications 6 à 8, **caractérisé en ce que** ledit capot secondaire (2, 21) comprend une saillie tubulaire (62), qui peut être insérée hermétiquement dans ledit siège (61) de la fritte et qui comprend un orifice extérieur (622) pour les gaz.

10. Batterie électrolytique, comprenant un réservoir qui a sensiblement la forme d'un parallélépipède et est muni à l'intérieur d'une pluralité de cellules électrolytiques, **caractérisé en ce que** ledit réservoir est fermé dans une région supérieure par le capot selon une ou plusieurs des revendications précédentes.
